# EUROPEAN PATENT SPECIFICATION

(11) **EP 1 914 016 B1**
(45) Date of publication and mention of the grant of the patent: **09.09.2015**
(21) Application number: 06425719.9
(22) Date of filing: 19.10.2006
(51) Int. Cl.: B09C 1/00

(54) **Groundwater decontamination system through in situ injection of oxidant and/or riducent gases**
Grundwasserdekontaminierungssystem durch in-situ-Injektion von Oxidations- und/oder Reduktionsgasen
Système de décontamination de nappe souterraine par l'injection in situ de gaz oxydant ou réducteur

(43) Date of publication of application: 23.04.2008
(73) Proprietor: SOCIETA' ITALIANA ACETILENE E DERIVATI S.I.A.D. S.p.A. in abbreviated form SIAD S.p.A., 24126 Bergamo (IT)
(72) Inventor: Bissolotti, Giorgio, 24126 Bergamo (IT); Pasinetti, Eleonora, 24126 Bergamo (IT); Peroni, Michela, 24126 Bergamo (IT)
(74) Representative: Minoja, Fabrizio

(56) References cited:
- EP-A- 1 174 197
- WO-A-03/043755
- US-A1- 2003 155 309
- US-A1- 2006 016 763

## Description

### Background of the invention

Legislation about ground and groundwater reclamation has been paying particular attention to *in situ* technologies, because these technologies do not require disposal or extraction of soil and/or water.

In Italy, unfortunately, most of remediation systems still remain bound to extraction/exportation and disposal. These systems are very expensive and produce huge quantities of waste that need to be transported and disposed of. In particular, in many cases, the disposal system used involves stocking the polluted ground in authorised rubbish dump.

These reclamation systems result to have a great environmental impact.

One of the technologies widely used to treat groundwater is *Pump & Treat,* that consists in pumping and treating the groundwater on site. It requires great economic resources and it can last many years before giving significant contamination reduction. The system often does not reach the pollutant limits target because the undissolved pollution substances present in the soil are slowly released and solubilised in groundwater, thus determining long pollution tails hard to remove unless other technologies, involving however higher costs, are used.

The treatment of pumped water is usually made on site, and needs the installation of big decontamination plants that often do not allow to leave the site active.

The treated water, moreover, has to be sent to disposal as waste because the discharge on superficial water is often not allowed, involving additional costs.

For these reasons, the application of *in situ* technologies, widely spread in the USA, begins to be of interest in Italy too, because of its undoubted economic and efficiency advantages.

Among these technologies the most widespread is *Air-Sparging.* This remediation system consists in injecting air in the soil using compressors with flow of 40-60 m³/h, in order to remove the contamination of the saturated and unsaturated ground fraction through biologic degradation and stripping processes.

*Air Sparging* is usually combined with a vapour extraction process to recover stripped volatile substances and subsequently subject them to treatment. The remediation system requires, therefore, the provision of a large number of (injection and suction) wells, the use of compressors and a vapours treatment system installation.

As such, besides having to be electrically powered, *Air-Sparging* involves significant on site physical obstacles and the application costs are often not competitive.

Efficiency of Air Sparging depends strictly on ground characteristics and it is very important to pay attention to preferential way that could avoid the homogeneous recovering of vapours.

Air Sparging is applicable when the ground depth is not greater than 15-20 m from piezometric level, since deeper applications require powerful compression systems with high energy consumption, that makes the treatment economically not competitive.

In order to reduce stripping processes and improve biological processes, decontamination of saturated ground fraction could involve the reduction of air injection till 8-15 m³/h: in this case the technology is called *biosparging.*

In case of volatile substances contamination, as light hydrocarbons, *biosparging* could involve stripping phenomena too, since gas flows remain significant, diffusion systems are not very efficient and the use of air does not optimise the oxygen dissolution in water. For these reasons *biosparging* often requires combined vapour extraction and treatment systems, with consequent increase of consequential economic and managerial costs. Moreover, *Biosparging* requires the use of compressors too, so it needs electric power and a place where to install the machines. The use of air allows to reach oxygen concentrations in groundwater of 8-9 mgO₂/l at most and so oxygen diffusion is slow and difficult.

In the last years, especially in the USA, new injection systems using pure oxygen instead of air have been introduced. Pure oxygen allows to reach concentrations higher than 40-60 mgO₂/l depending on the depth of the water column and on temperature. Gas diffusion phenomena can be increased thanks to high concentration gradients, moreover gas flows can be reduced with respect to the air, thus decreasing stripping processes of volatile substances present in groundwater.

The diffusion equipment has a great importance on the gas dissolution efficiency. In particular, the more gas-liquid exchange surface increases, the more efficient the oxygen dissolution in groundwater. The smaller the gas bubbles, the better the gas dissolution.

One of the existing systems that apply this principle is ISOC™ (*In Situ Submerged Oxygen Curtain*). This technology has been disclosed as using hollow polymeric membranes able to diffuse oxygen without producing bubbles going out of the water. This system, which is very efficient in terms of gas dissolution in groundwater, results to be partially limited by biofouling phenomena (biomass/bacteria adhesion), that in the course of time, determine the membrane blinding with loss of the system efficiency. In order to avoid biofouling, this technology is preferentially applied out of polluted zone, leaving the groundwater flow to transport oxygen inside the contaminated zone. This operational way induces longer remediation times and, as a consequence, an increase of costs since the velocity of the ground water flow could be very slow.

Another system that allows to greatly increase oxygen concentration in groundwater is that based on the introduction of chemical substances in the aquifer, typically MgO₂, that are able to release oxygen when they are in contact with water. Among these systems, ORC *(Oxygen Release Compounds)* is the most known. ORC consists in the introduction of oxygenate substances in the form of slurry or "socks" to be immersed in groundwater. In the former case, trenches reaching the aquifer deepness have to be dug in order to distribute the products in a uniform way. In the latter case, the socks lowered in the wells have to be periodically changed and, moreover, the oxygen diffusion is blocked by biomass growth on their surface.

US 2003/155309 **concern a system of remediation based on the use of liquid hydrogen peroxide injected in groundwater through a regulation system based on soil gas analysis and a pneumatic mechanism.**

**It is based on the use of a system of injection of liquid oxidant or oxygen-realising agent as hydrogen peroxide stocked in a tank. In order to regulate the flow of this liquid a pressured gas stocked in another tank is used. The two tanks are used to feed a lot of injection points.**

EP-1774197A **concern a system of remediation based on the use of air-ozone combined with liquid hydroperoxide injected in groundwater through a compressor and a pump. The use of ozone and liquid peroxides needs energy for feeding generator, compressors and pumps and needs space for instruments and reactants stocking.**

WO 03/0443755 **concern a system of remediation based on the use of injection at different depth of compressed-air, produced by windmill, with nutrient dosage and on-line control of remediation progress through sensors and data-logger. Air injection is characterized by flows of 3 Nm³/ h and the venting heads are constituted by cylindrical holed structures made of steel or plastic material. This kind of injection is typical of a biosparging system and it is characterized by low oxygen dissolution efficiency and stripping effects.**

Anyway, the principle of diffusion of these systems is very different from that utilised with direct gas injection.

### Summary of the invention

A new gas injection system operating in polluted groundwater that overcames the problems of the presently used technologies has now been found and is the object of the invention.

Such a system is characterized by the features of the attached independent claim 1.

Advantageous embodiments of the invention are shown in the dependent claims.

The system of the invention uses a porous membrane for the microdiffusion in groundwater of oxidising and/or reducing gases, and it is characterised in that it does not require electric energy, it is applied *in situ*, it is not invasive thus allowing to leave the application area operative and free from obstacles.

The system allows to reach high gas concentrations in the application wells, so that the diffusion velocity is very high and remediation times are reduced.

The system allows to purify the polluting substances present in groundwater through oxidation or reduction processes.

Compared to other technologies used at present, the system of the invention allows to obtain several advantages: a very low site impact; high application flexibility; absence of volatile substances stripping; absence of biofouling on gas diffusion surface; no waste production.

Gases preferentially used are pure oxygen, air, ozone for oxidation processes; hydrogen, methane, propane for reduction processes; carbon dioxide for chemical processes; nitrogen for some biologic processes.

A particular object of the present invention is an oxygen injection system in groundwater through appropriate microstructured porous membrane that avoids or at least reduces biofouling, so as to interfere not with microdiffusion and oxygen utilisation for long periods. A particular object of invention is also the system conception/implementation which permits to leave the entire remediation area free from obstacles.

### Detailed description of the invention

The invention will be now disclosed with reference to an exemplifying, non limiting embodiment thereof as shown in attached drawings:
- Fig. 1 schematically represents, in the whole, the gas diffusion system according to the invention;
- Fig. 2 is a schematic view of the gas alimentation equipment;
- Fig. 3 is a schematic view of the gas diffuser;
- Fig. 4 is a graph of the progress of polluting species registered in a well situated 5 meters downstream from the injection well according to an application example of the invention;
- Fig. 5 is a graph reporting the results obtained in a diffusion test with a gas tracer.

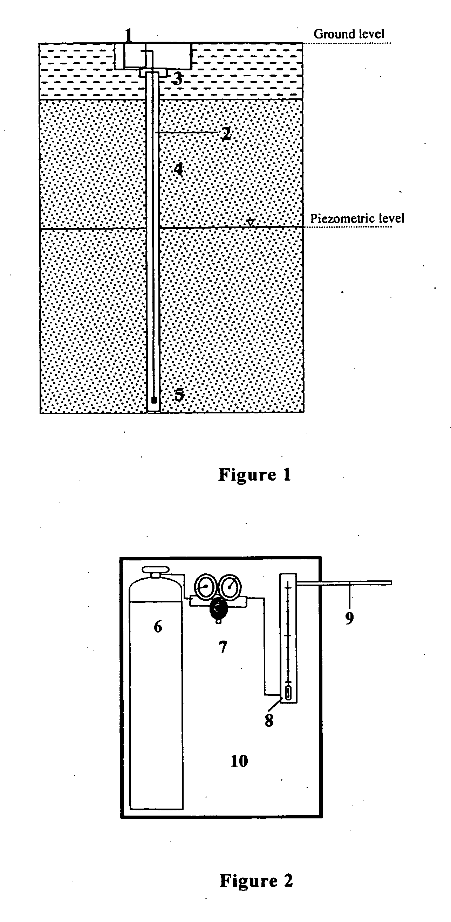

With particular reference to Fig. 1, the system of the present invention substantially consists of:
- a gas alimentation equipment, generically indicated by reference number 1, situated at the head 3 of a injection well 4;
- an alimentation line 2 extended along all the well 4;
- a diffusion equipment 5.

Referring to Fig. 2, the gas alimentation equipment 1 is constituted by:
- at least, a compressed gas cylinder 6 (oxygen and/or tracer gases and/or mixture of oxidising or reducing gases);
- a pressure reducer 7;
- a flow regulator 8;
- a connecting line and hose fitting 9.

Depending on the well pipe dimension, this part of the system may be housed in a portable box 10. This box may be placed underground near the injection well or over the well head. In any case, it is put under the ground-line, leaving the site completely free from blocks and obstacles and usable for the trucks. The box may be protected by manhole cover or grating, suitably dimensioned for holding up vehicles weight. Attention should be paid to the placing of water evacuation systems on the housing bottom. In this way, equipment flooding and damaging can be avoided.

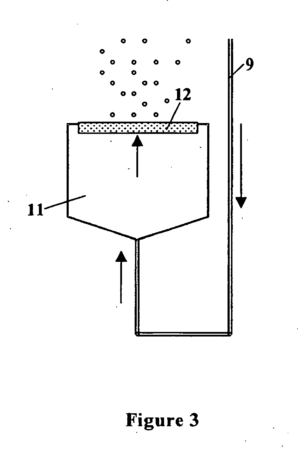

Referring to Fig. 3, diffusion equipment 5 is constituted by:
- gas pipe and hose fitting 9;
- diffuser body 11;
- diffusion microporous membrane 12.

In accordance with the invention, the system essentially consists, in the following stages:
- stock of compressed gas in cylinders and/or bundles of cylinders;
- pressure reduction device of compressed gas up to 1-5 bars;
- gas flow regulation at 0.5-1.5 l/h;
- oxidising gas and/or reducing gas and/or mixture gas injection in groundwater through porous microstructured diffuser.

Pressure reduction can be carried out by double stage and/or multistage reducers and/or calibrated holes.

Gas flow regulation is obtained through flowmeters and/or calibrated devices.

The present invention can be mainly applied in groundwater decontamination. Preferentially used gases are pure oxygen, air, ozone for oxidation processes; and hydrogen, methane, propane for reduction processes; carbon dioxide for chemical processes; nitrogen for some biologic processes.

In case of purification of polluted saturated ground fraction, the mainly used gas is oxygen, which is able to promote the aerobic biodegradation process. Oxygen stimulates aerobic biologic activity of the site autochthon micro-organisms, allowing the biodegradation of polluting substances. With this system, reducing gases, such as hydrogen, can be fed in order to activate reductive biodegradation of groundwater contamination.

In particular cases, the system of the present invention allows to feed ozone or carbon dioxide. Ozone can be used in case strong oxidation is required, while carbon dioxide is used when pH of groundwater and soil has to be modified.

Gas injection does not require the use of electric power since it exploits potential energy of compressed gas. The system does not use electric energy in any parts of it. In this way, the system can be applied at any site, even when hydrocarbons are present and/or particular safety procedures are required.

The cylinders used for gas injection have to be periodically replaced, but in the light of the low flows required, the replacement can be carried out after some months. Replacements can be coincident with the normal site controls (water sampling, groundwater level measure, etc.), and so they do not require additional labour, with positive effects on management costs.

The system allows to reach high dissolution efficiency of gas in the water bearing stratum using microporous membrane. This particular membrane can be either plan or curved and bacteria or biomass present in groundwater hardly attach to it, even if their growth is favoured by gas injection. Microporous membrane represents the core of the entire gas injection system.

The remediation system of the present invention is characterized by:
- efficacy
- compactness
- very low impact on the remediation site, that remains entirely passable
- possibility to carry out reclamation while maintaining the site operative
- absence of stripping phenomena
- absence of contact between operators and toxic/irritant/carcinogenic substances
- absence of the *biofouling* phenomena on the diffusion membrane
- easy management
- fast equipment, installation and extraction of the diffusion system
- absence of waste production
- cost competitiveness compared to traditional systems
- easiness and fastness of sizing through the use of oxygen and tracer gas mixtures.

Gas is diffused in groundwater through a microstructured porous membrane 12 set up on a suitable support 11, made of steel, polymeric material or glass. In particular, the size of membrane pores is smaller than 16 micron, allowing bubbles formation with micrometric dimensions and high dissolution capacity in water.

Gas is usually supplied at pressures of about 2,5 bars and flows of about 10-15 cm³/min equal to 0,6-0,9 Nl/h. However, it is possible to set other pressure and/or flows as a function of groundwater gas consumption.

The membrane preferably consists of a round-shaped plan surface. This conformation allows the diffusion of gas through a horizontal surface, so as to minimise coalescence phenomena and to keep high dissolution rate. For some applications, however, the membrane can also have a curved profile.

The membrane is made of boron silicate glass, constituted by siliceous sand, boric oxide and several others minerals. This material is particularly resistant to heat, chemical corrosion, sudden change of temperature, biomass attachment phenomena (biofouling). Such properties allow to keep the membrane surface whole and clean for long times, thus guaranteeing a constant gas alimentation in terms of bubbles dimension and gas flow.

The efficiency of the gas dissolution is higher than 90%; after 6 month of continuous use, efficiency is higher than 60%. This is due to: low flow supplied; micrometric bubbles dimension; diffusion surface disposition and chemical-physical characteristic of the membrane material. Such high efficiency avoids possible undesired phenomena such as stripping of volatile substances present in groundwater.

The injection system is characterised by high application flexibility. The diffuser dimensions can vary from 3 to 15 cm of diameter (anyway dimensions do not limit the process and can be greater). This allows to apply the system in wells with different dimensions and does not require realisation of dedicated wells since already existing wells can be used. The immersion level of the diffuser is a flexible parameter too. The higher the immersion depth, the higher the concentration of dissolved gas, but the diffuser can be put only up to few centimetres from the piezometric level. By way of example, a diffuser placed 2 meters under the piezometric level, with a water temperature of about 15°C, can reach oxygen concentration of about 45 mg/l along all the water column in the well.

In order to promote and increase the diffusion speed through the groundwater, a forced recycling of groundwater from upstream to downstream, can be used. When using particular gases, appropriate security devices for control of pressures and/or explosive levels inside the injection wells can be installed.

A further element of application flexibility consists in the possibility to use small (1-9 litres) or usual gas cylinders (10-50 litres and more) for the supply system.

In the former case, a portable supply system housed in the appropriate box 10 (Fig. 1 e 2) can be built, which box can be put in an underground hole sideways or on top of each injection well, if there is space enough. This solution allows to have no visual impact on the site. Even if cylinders volumes are small, considering the low alimentation flows, the duration of the cylinders is more than 30 days, depending on the groundwater gas consumption.

The use of bigger cylinders can induce higher expenses for their positioning but, anyway, they can be housed underground near the well so that the area is left free of obstacles.

Diffusers can be fed by bundles too. In this case bundles have to be housed in an external structure surrounded by an appropriate enclosure. A rack system can be built to supply more wells at the same time.

Although all three solutions herein disclosed can be applied, the first one is the best because it reduces the work required for housing the gas cylinders, it leaves the entire zone completely free and it has no visual impact of the reclamation site.

Among the various possible applications, the injection system allows, moreover, to use open or hermetically closed wells. In the former case the system does not require particular additional controls. In the latter case, a pressure control system provided with an appropriate security device is required in the well. Using closed well allows increasing the pressure of the internal well atmosphere over the piezometric level, determining an increase of oxygen concentration reachable.

The sizing of the injection system can involve a pilot test using inert tracer gases that do not interact with the chemical-biological activity of the soil and, so, allow to quickly and univocally identify the specific influence radius of the technology specifically applied for the investigated site. In this manner, the particular conditions of diffusion of the site as a function of its hydrogeologic characteristics can be identified.

Use of this method is claimed in a patent application filed in the applicant's name on the same filing date of the present application.

Among existing inert gases, neon has been found to be the best solution in terms of economic convenience and analytical detection.

During the pilot test, a mixture of tracer gases and oxygen and/or reducing gases can be used so as to obtain the influence radius and the kinetic of the gas consumption of the groundwater.

The disclosed system can be applied in the following, non limiting cases:
- Groundwater contaminated by organic substances
- Groundwater contaminated by inorganic substances
- Groundwater contaminated by hydrocarbon substances
- Groundwater contaminated by halogenated substances
- Groundwater contaminated by metallic ions
- Groundwater with contamination which can be biodegraded through oxidation
- Groundwater with contamination which can be biodegraded through reduction
- Groundwater with chemically oxidising contamination
- Groundwater with chemically reducible contamination
- Groundwater of sites with any stratigraphic/hydrologic/geologic configuration
- In general, every saturated ground that needs to be reclaimed

### Application example

An example of application of the reclamation system of the present invention will be disclosed in the following pages.

The system was applied in a site of a petrol pump retail under reconstruction, wherein contamination was caused by leaking tanks. The choice of the reclamation system of the present invention was due to the need of the site's owner to adopt a system that did not cause any hindrance to the reconstructions activities. Hydrogeologically, the site was principally made of sands and silts with a very low hydraulic conductibility (k=10⁻⁵m/s) and a consequent groundwater velocity of 0,8 cm/d.

The contamination level was particularly high and diffused all over the site, with a concentration of total hydrocarbon up to 50000 µgₙ₋ₕₑₓₐₙₑ/1, concentration of aromatic compound up to 2500 µg/l and concentration of MTBE up to 8000 µg/l.

The application of the system involved a first phase of feasibility of the reclamation process through an *in situ* pilot test. The test was carried out using the above described system through an underground oxygen cylinder in the gas supply equipment. The gas alimentation was set to 0,6 1_{O2}/h (at normal condition) and the pressure to 2,5 bars.

The test involved the injection in a well situated in the centre of the contaminated zone and the monitoring of a series of piezometers around the injection well.

Within 20 days, complete removal of the contamination in the injection well could be obtained. In the proximity of the piezometers, a gradual reduction of the contamination level up to 5 meters from the injection well could be recorded.

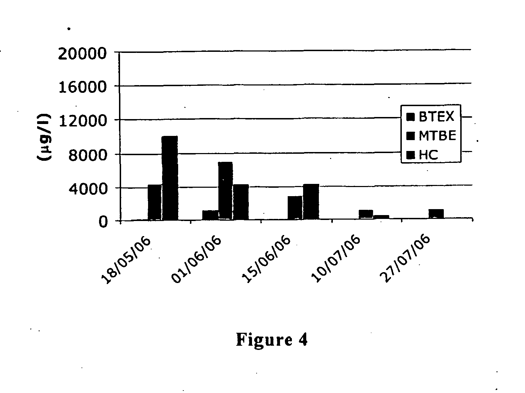

Fig. 4 shows the progress of the decontamination recorded in the well situated 5 meter downstream the injection well.

In the light of the high contamination of the site due to the oxygen consumption by bacteria, a delay of the dissolved oxygen increase was reported during the pilot test, compared to the actual diffusion velocity of gas in the groundwater.

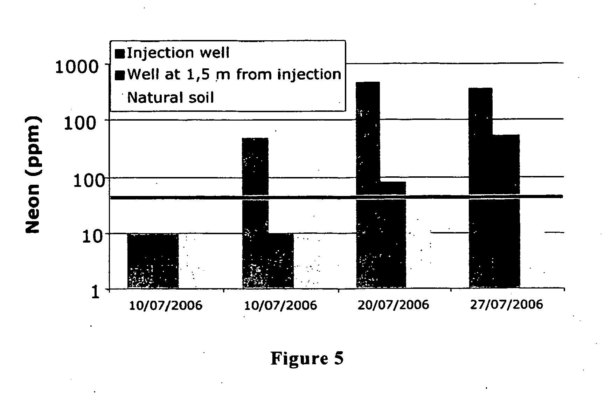

In order to correctly evaluate the actually required reclamation, a diffusion test was carried out using an inert tracer gas (Neon). The obtained results are shown in Fig. 5.

The test with inert tracer gas allowed to estimate the gas diffusion in the specific site groundwater velocity, which was 15 cm/d, that is higher than the velocity of the water stratum.

On the basis of the collected data, an influence radius of about 45 m in 30-40 days was estimated.

## Claims

1. A decontamination system of contaminated sites through gas injection in at least an injection well/piezometer (4) comprising:
- a gas alimentation equipment (1) situated at the head (3) of the injection well (4);
- a supply pipe (2), extended along the whole well (4);
- a diffusion equipment (5);
**characterized in that**;
- the gas alimentation equipment (1) comprises at least one compressed gas container (6),
- the diffusion equipment (5) consists in at least one microporous glass membrane (12) placed in groundwater, and, in use,
the gas injection is carried out using the potential energy of compressed gas, without involving any external power for the system.

2. The system of claim 1, wherein said microporous membrane for the gas diffusion (12) is made of boron silicate glass resistant to chemical-physical. corrosion and biomass attachment (biofouling).

3. The system of any one of claims 1 or 2, wherein the pores of the membrane (12) are smaller than 16 micron.

4. The system of any one of claims 1, 2 or 3, wherein said microporous membrane is plan or curved, and its size is such that it can be inserted in well/piezometer with a diameter ranging from 3 to 20 cm.

5. The system of any one of the previous claims, wherein said microporous membrane (12) is set on a body support (11) made of steel, polymeric material or glass.

6. The system of claim 1, and any one or more of the previous claims, wherein said compressed gas container (6) is a cylinder or another pressurised container, preferably with water capacity ranging from 1 to 50 litres.

7. The system of any one of the previous claims wherein each well (4) is provided with at least a compressed gas container containing the gas to be diffused in groundwater.

8. The system of claim 1, and any one or more of the previous claims, wherein said alimentation equipment (1) is put in a housing box (10) placed in a underground hole near or over the injection well so that the hole and therefore the entire reclamation site remain passable by vehicles.

9. The system of claim 1 and any one or more of the previous claims, wherein a pressure device control (7) and a flow regulator (8) are assembled downstream of the compressed gas container (6).

10. The system of claim 9, wherein the pressure device control (7) is two-stage or multistage reducer or has one or more calibrated holes.

11. The system of claim 9, wherein the flow regulator (8) consists in a flowmeter or in calibrated devices.

12. The system of any one of the previous claims, wherein safety devices are provided for controlling the pressure and/or explosive levels inside the injection wells.

13. The system of any of the previous claims, wherein the compressed gas used for site decontamination and injected in groundwater is an oxidising gas, either pure and/or mixed with other gases.

14. The system of any one of claims 1 to 12, wherein the compressed gas used for site decontamination and injected in groundwater is a reducing gas, either pure and/or mixed with other gases.

15. The system of claim 13, wherein the compressed oxidising gas is pure or mixed oxygen, or ozone mixed with oxygen or air.

16. The system of claim 14, wherein the compressed reducing gas is pure or mixed hydrogen, or pure or mixed methane, or pure or mixed propane.

17. The system of any one of claims 1 to 12, wherein the compressed gas is pure or mixed carbon dioxide.

18. The system of any one of the previous claims, wherein the pressure of the gas, or gas mixture, in the diffuser (5) ranges from 1 to 10 (absolute) bar, preferably 2,5 - 5 bar.

19. The system of any one of the previous claims, wherein the supply flow of gas, or gas mixture, ranges from 0,5 to 20 l/h, preferably 0,6-0,9 1/h for each diffuser (5).

20. The system of any one of the previous claims, wherein the gas, or mixture, is injected at a depth greater than 0,1 m, preferably greater than 1 m compared to piezometric level.

21. The system of any one of the previous claims, wherein the dissolution efficiency is about 90% and is maintained higher than 60% after 6 month of continuous work.

22. The system of any one of the previous claims, wherein a gas compressed container (6) is provided for each injection point.

23. The system of any one of claims 1 to 21, wherein each compressed gas container (6) feeds more than one injection point though underground lines, leaving the reclamation site entirely passable by vehicles.

24. The system of any one of the previous claims, wherein the injection wells/piezometers (4) are open.

25. The system of any one of claims 1 to 23, wherein wells/piezometers are (4) hermetically closed.

26. The system of any one of the previous claims, involving a forced recycling of groundwater from upstream to downstream.

27. The system of any one of the previous claims, wherein gas injection is executed at several points, placed inside the contamination zone and/or upstream and/or downstream the contamination zone.

28. The system of any one of the previous claims, wherein the design of the reclamation system is made using gas mixture, where one gas is the agent useful for reclamation and the other, or others, are tracer gases useful for identifying influence radius of injection.

29. The system of any one of claims 1 to 27, wherein the monitoring of the reclamation progress is made by injecting a gas mixture during the reclamation itself, one gas being the agent useful for decontamination and one or more other gases being tracer gases.

30. The system of claims 28 and 29, wherein tracer gases are noble gases such as: helium, neon, argon, krypton, xenon, preferably neon.

## Patentansprüche

1. Dekontaminierungssystem für kontaminierte Stellen durch Gasinjektion in wenigstens eine Injektionsbohrung/ein Piezometer (4), umfassend:
- eine Gaseinspeisungsvorrichtung (1), die sich am Kopf (3) der Injektionsbohrung (4) befindet;
- ein Zuführungsrohr (2), das sich entlang der gesamten Bohrung (4) erstreckt;
- eine Diffusionsvorrichtung (5),
**dadurch gekennzeichnet, dass**
- die Gaseinspeisungsvorrichtung (1) wenigstens einen Druckgasbehälter (6) umfasst,
- die Diffusionsvorrichtung (5) aus wenigstens einer mikroporösen Glasmembran (12) besteht, die im Grundwasser platziert ist, und, in Gebrauch, die Gasinjektion unter Verwendung der potenziellen Energie von komprimiertem Gas durchgeführt wird, ohne dass eine externe Energie für das System involviert ist.

2. System gemäß Anspruch 1, wobei die mikroporöse Membran für die Gasdiffusion (12) aus einem Borsilicat-Glas hergestellt ist, das gegenüber chemisch-physikalischer Korrosion und Biomasseanhaftung (Biofouling) resistent ist.

3. System gemäß einem der Ansprüche 1 oder 2, wobei die Poren der Membran (12') kleiner als 16 Mikrometer sind.

4. System gemäß einem der Ansprüche 1, 2 oder 3, wobei die mikroporöse Membran plan oder gekrümmt ist und ihre Größe so ist, dass sie in die Bohrung/das Piezometer eingesetzt werden kann, mit einem Durchmesser im Bereich von 3 bis 20 cm.

5. System gemäß einem der vorangehenden Ansprüche, wobei die mikroporöse Membran (12) auf einen Körperträger (11) aufgesetzt ist, der aus Stahl, Polymermaterial oder Glas besteht.

6. System gemäß Anspruch 1 und einem oder mehreren der vorangehenden Ansprüche, wobei der Druckgasbehälter (6) ein Zylinder oder ein anderer Druckbehälter, vorzugsweise mit einer Wasserkapazität im Bereich von 1 bis 50 Liter, ist.

7. System gemäß einem der vorangehenden Ansprüche, wobei jede Bohrung (4) mit wenigstens einem Druckgasbehälter versehen ist, welcher das in Grundwasser zu diffundierende Gas enthält.

8. System gemäß Anspruch 1 und einem oder mehreren der vorangehenden Ansprüche, wobei die Einspeisungsvorrichtung (1) in einen Gehäusekasten (10) eingesetzt ist, welcher in einem unterirdischen Loch nahe oder über der Injektionsbohrung platziert ist, sodass das Loch und damit die gesamte Rückgewinnungsstelle für Fahrzeuge passierbar bleibt.

9. System gemäß Anspruch 1 und einem oder mehreren der vorangehenden Ansprüche, wobei eine Druckregeleinrichtung (7) und ein Strömungsregulator (8) stromabwärts des Druckgasbehälters (6) eingebaut sind.

10. System gemäß Anspruch 9, wobei die Druckregeleinrichtung (7) ein 2-Stufen- oder Mehr-Stufen-Minderer ist oder ein oder mehrere kalibrierte Löcher hat.

11. System gemäß Anspruch 9, wobei der Strömungsregulator (8) aus einem Durchflussmesser oder aus kalibrierten Vorrichtungen besteht.

12. System gemäß einem der vorangehenden Ansprüche, wobei Sicherheitsvorrichtungen zur Regulierung des Drucks und/oder der explosiven Level im Inneren der Injektionsbohrungen bereitgestellt sind.

13. System gemäß einem der vorangehenden Ansprüche, wobei das komprimierte Gas, das zur Stellendekontaminierung verwendet wird und in Grundwasser injiziert wird, ein oxidierendes Gas, entweder rein und/oder gemischt mit anderen Gasen, ist.

14. System gemäß einem der Ansprüche 1 bis 12, wobei das komprimierte Gas, das zur Stellendekontaminierung verwendet wird und in Grundwasser injiziert wird, ein reduzierendes Gas, entweder rein und/oder gemischt mit anderen Gasen, ist.

15. System gemäß Anspruch 13, wobei das komprimierte oxidierende Gas reiner oder gemischter Sauerstoff oder Ozon, gemischt mit Sauerstoff oder Luft, ist.

16. System gemäß Anspruch 14, wobei das komprimierte reduzierende Gas reiner oder gemischter Wasserstoff oder reines oder gemischtes Methan oder reines oder gemischtes Propan ist.

17. System gemäß einem der Ansprüche 1 bis 12, wobei das komprimierte Gas reines oder gemischtes Kohlendioxid ist.

18. System gemäß einem der vorangehenden Ansprüche, wobei der Druck des Gases oder des Gasgemisches in dem Diffusor (5) von 1 bis 10 bar (absolut), vorzugsweise von 2,5-5 bar, reicht.

19. System,gemäß einem der vorangehenden Ansprüche, wobei der Zuführungsstrom von Gas oder Gasgemisch von 0,5 bis 20 1/h, vorzugsweise 0,6-0,9 1/h für jeden Diffusor (5) reicht.

20. System gemäß einem der vorangehenden Ansprüche, wobei das Gas oder das Gemisch in einer Tiefe von größer als 0,1 m, vorzugsweise größer als 1 m, verglichen mit dem piezometrischen Level, injiziert wird.

21. System gemäß einem der vorangehenden Ansprüche, wobei die Lösungseffizienz etwa 90% ist und bei über 60% nach 6 Monaten kontinuierlicher Arbeit gehalten wird.

22. System gemäß einem der vorangehenden Ansprüche, wobei ein Druckgasbehälter (6) für jeden Injektionspunkt bereitgestellt wird.

23. System gemäß einem der Ansprüche 1 bis 21, wobei jeder Druckgasbehälter (6) mehr als einen Injektionspunkt durch unterirdische Leitungen speist, wobei die Rückgewinnungsstelle vollständig für Fahrzeuge passierbar bleibt.

24. System gemäß einem der vorangehenden Ansprüche, wobei die Injektionsbohrungen/Piezometer (4) offen sind.

25. System gemäß einem der Ansprüche 1 bis 23, wobei Bohrungen/Piezometer (4) hermetisch verschlossen sind.

26. System gemäß einem der vorangehenden Ansprüche, das eine forcierte Rückführung von Grundwasser von stromaufwärts nach stromabwärts involviert.

27. System gemäß einem der vorangehenden Ansprüche, wobei eine Gasinjektion an mehreren Punkten, die sich innerhalb der Kontaminationszone und/oder stromaufwärts und/oder stromabwärts der Kontaminationszone befinden, durchgeführt wird.

28. System gemäß einem der vorangehenden Ansprüche, wobei der Aufbau des Rückgewinnungssystems unter Verwendung eines Gasgemisches erfolgt ist, wobei ein Gas das Mittel ist, das zur Rückgewinnung verwendbar ist, und das andere oder andere Tracer-Gase sind, die zur Identifizierung des Einflusses des Injektionsradius nützlich sind.

29. System gemäß einem der Ansprüche 1 bis 27, wobei die Überwachung des Rückgewinnungsfortschrittes durchgeführt wird, indem ein Gasgemisch während der Rückgewinnung selbst injiziert wird, wobei ein Gas das Mittel ist, das zur Dekontaminierung nützlich ist, und ein oder mehrere andere Gase Tracer-Gase sind.

30. System gemäß den Ansprüchen 28 und 29, wobei Tracer-Gase Edelgase, wie z.B. Helium, Neon, Argon, Krypton, Xenon, vorzugsweise Neon, sind.

## Revendications

1. Sytème de décontamination de sites contaminés par l'injection de gaz dans au moins un puits d'injection/piézomètre (4) comprenant :
- un équipement d'alimentation en gaz (1) situé à la tête (3) du puits d'injection (4) ;
- une conduite d'alimentation (2), se prolongeant le long du puits entier (4) ;
- un équipement de diffusion (5) ;
**caractérisé en ce que** :
l'équipement d'alimentation en gaz (1) comprend au moins un récipient de gaz comprimé (6),
l'équipement de diffusion (5) est constitué d'au moins une membrane de verre microporeuse (12) placée dans l'eau souterraine, et
durant l'utilisation, l'injection de gaz est conduite en utilisant l'énergie potentielle du gaz comprimé, sans impliquer de quelconque énergie externe pour le système.

2. Système selon la revendication 1, dans lequel ladite membrane microporeuse pour la diffusion de gaz (12) est constituée de verre silicate de bore résistant à la corrosion chimique-physique et à la fixation de biomasse (biocolmatage).

3. Système selon l'une quelconque des revendications 1 ou 2, dans lequel les pores de la membrane (12) sont inférieurs à 16 microns.

4. Système selon l'une quelconque des revendications 1, 2 ou 3, dans lequel ladite membrane microporeuse est de forme plane ou incurvée, et sa taille est telle qu'elle peut être insérée dans un puits/piézomètre d'un diamètre s'étendant de 3 à 20 cm.

5. Système selon l'une quelconque des revendications précédentes, dans lequel ladite membrane microporeuse (12) est fixée sur un support formant corps (11) constitué d'acier, de matériau polymère ou de verre.

6. Système selon la revendication 1, et n'importe laquelle ou plusieurs des revendications précédentes, dans lequel ledit récipient de gaz comprimé (6) est un cylindre ou un autre récipient pressurisé, de préférence avec une capacité en eau s'étendant de 1 à 50 litres.

7. Système selon l'une quelconque des revendications précédentes dans lequel chaque puits (4) est utilisé avec au moins un récipient de gaz comprimé contenant le gaz à diffuser dans l'eau souterraine.

8. Système selon la revendication 1, et n'importe laquelle ou plusieurs des revendications précédentes, dans lequel ledit équipement d'alimentation (1) est placé dans une boîte de logement (10) placée dans un trou souterrain proche ou au-dessus du puits d'injection de sorte que le trou et par conséquent le site entier de remédiation demeure carrossable pour les véhicules.

9. Système selon la revendication 1 et n'importe laquelle ou plusieurs des revendications précédentes, dans lequel une commande de dispositif de pression (7) et un régulateur de flux (8) sont assemblés en aval du récipient de gaz comprimé (6).

10. Système selon la revendication 9, dans lequel la commande du dispositif de pression (7) est un réducteur à deux niveaux ou multiniveau ou présente un ou plusieurs trous calibrés.

11. Système selon la revendication 9, dans lequel le régulateur de flux (8) est constitué d'un fluxmètre ou de dispositifs calibrés.

12. Système selon l'une quelconque des revendications précédentes, dans lequel des dispositifs de sécurité sont proposés pour réguler la pression et/ou les niveaux d'explosif à l'intérieur des puits d'injection.

13. Système selon l'une quelconque des revendications précédentes, dans lequel le gaz comprimé utilisé pour la décontamination de site et injecté dans l'eau souterraine est un gaz oxydant pur et/ou mélangé à d'autres gaz.

14. Système selon l'une quelconque des revendications 1 à 12, dans lequel le gaz comprimé utilisé pour la décontamination de site et injecté dans l'eau souterraine est un gaz réducteur pur et/ou mélangé à d'autres gaz.

15. Système selon la revendication 13, dans lequel le gaz oxydant comprimé est de l'oxygène pur ou mixte, ou de l'ozone mélangé à de l'oxygène ou de l'air.

16. Système selon la revendication 14, dans lequel le gaz réducteur comprimé est de l'hydrogène pur ou mixte, ou du méthane pur ou mixte, ou du propane pur ou mixte.

17. Système selon l'une quelconque des revendications 1 à 12, dans lequel le gaz comprimé est du dioxyde de carbone pur ou mixte.

18. Système selon l'une quelconque des revendications précédentes, dans lequel la pression du gaz, ou du mélange de gaz, dans le diffuseur (5) s'étend de 1 à 10 bars (absolus), de préférence de 2,5 à 5 bars.

19. Système selon l'une quelconque des revendications précédentes, dans lequel le flux d'alimentation en gaz, ou le mélange gazeux, s'étend de 0,5 à 20 l/h, de préférence de 0,6 à 0,9 l/h pour chaque diffuseur (5).

20. Système selon l'une quelconque des revendications précédentes, dans lequel le gaz, ou le mélange, est injecté à une profondeur supérieure à 0,1 m, de préférence supérieure à 1 m comparé au niveau piézométrique.

21. Système selon l'une quelconque des revendications précédentes, dans lequel l'efficacité de dissolution est d'environ 90 % et est maintenue au-dessus de 60 % après 6 mois de fonctionnement continu.

22. Système selon l'une quelconque des revendications précédentes, dans lequel un récipient de gaz comprimé (6) est proposé pour chaque point d'injection.

23. Système selon l'une quelconque des revendications 1 à 21, dans lequel chaque récipient de gaz comprimé (6) alimente plus d'un point d'injection à travers les conduites souterraines, laissant le site de remédiation entièrement carrossable pour les véhicules.

24. Système selon l'une quelconque des revendications précédentes, dans lequel les puits d'injection/piézomètres (4) sont ouverts.

25. Système selon l'une quelconque des revendications 1 à 23, dans lequel les puits/piézomètres (4) sont hermétiquement fermés.

26. Système selon l'une quelconque des revendications précédentes, impliquant un recyclage forcé de l'eau souterraine depuis l'amont vers l'aval.

27. Système selon l'une quelconque des revendications précédentes, dans lequel l'injection de gaz est exécutée à divers points, placés à l'intérieur de la zone de contamination et/ou en amont et/ou en aval de la zone de contamination.

28. Système selon l'une quelconque des revendications précédentes, dans lequel la conception du système de remédiation est effectuée en utilisant un mélange gazeux, dans lequel un gaz est l'agent utile à la remédiation et l'autre, ou les autres, sont des gaz de traçage utiles à l'identification de l'influence du rayon d'injection.

29. Système selon l'une quelconque des revendications 1 à 27, dans lequel le suivi de la progression de la remédiation est effectué par injection d'un mélange de gaz durant la remédiation elle-même, un gaz étant l'agent utile à la décontamination et un ou plusieurs autres gaz étant des gaz de traçage.

30. Système selon les revendications 28 et 29, dans lequel les gaz de traçage sont des gaz nobles tels que : l'hélium, le néon, l'argon, le krypton, le xénon, de préférence le néon.
